# EUROPÄISCHE PATENTSCHRIFT

(11) **EP 2 823 737 B1**
(45) Veröffentlichungstag und Bekanntmachung des Hinweises auf die Patenterteilung: **01.06.2016**
(21) Anmeldenummer: 14169381.2
(22) Anmeldetag: 22.05.2014
(51) Int. Cl.: A47J 31/60

(54) **Verfahren zum Betreiben eines Getränkebereiters und Getränkebereiter**
Method for operating of a beverage preparation device and beverage preparation device
Procédé de fonctionnement d'un préparateur de boissons et préparateur de boissons

(30) Priorität: 11.07.2013 DE 102013107377
(43) Veröffentlichungstag der Anmeldung: 14.01.2015
(73) Patentinhaber: Miele & Cie. KG, 33332 Gütersloh (DE)
(72) Erfinder: Last, Mario, 33739 Bielefeld (DE); Tembaak, Jutta, 49492 Westerkappeln (DE)

(56) Entgegenhaltungen:
- WO-A1-83/04447
- WO-A1-2010/105208
- US-A1- 2005 178 792
- US-A1- 2007 251 459

## Beschreibung

Die Erfindung betrifft ein Verfahren zum Betreiben eines Getränkebereiters, wie Kaffeevollautomat oder Teevollautomat, umfassend ein Gehäuse und zumindest ein Strömungsleitungssystem, welches mindestens einen Wasser enthaltenden bzw. befüllbaren Wasserbehälter oder einen Wasseranschluss, wenigstens eine Pumpe zum Fördern des Wassers durch Leitungsabschnitte und Komponenten des Strömungsleitungssystems, mindestens eine Heizeinrichtung zum Erhitzen des Wassers, mindestens eine Ventilanordnung und wenigstens eine Entnahmeeinrichtung umfasst.

Wasser weist regional sehr unterschiedliche chemische Zusammensetzungen auf. Dabei stellen insbesondere Calciumcarbonat (CaCO₃) und Magnesiumcarbonat (MgCO₃) sowie deren chemische Verbindungen ein besonderes Problem dar, weil sich diese Stoffe in Fluiden und insbesondere in Wasser (H₂O) führenden Leitungen und Aggregaten absetzen und die Leitungen beziehungsweise Aggregate über einen längeren Zeitraum betrachtet entweder außer Betrieb setzen oder eine ungehinderte Fluidströmung zumindest in entscheidendem Maße behindern. Dieses Problem besteht folglich nicht nur bei Wasser, sondern generell bei Fluiden, also auch bei gasförmigen Stoffen auf Wasserbasis. Somit sind Dampf führende Leitungen ebenso betroffen, wie Flüssigkeitsleitungen. Um beim Beispiel des Wassers zu bleiben, ist für die Bestimmung der Eigenschaften des Wassers dessen Karbonathärte maßgeblich. Die Karbonathärte des Wassers entsteht durch chemische Verbindungen zwischen Calciumcarbonat und Magnesiumcarbonat einerseits und dem im Wasser vorhandenen Kohlendioxid (CO2) ("Kohlensäure") andererseits. Calciumcarbonat reagiert nämlich in Wasser mit Kohlendioxid zu Calciumhydrogencarbonat (Ca(HCO₃)₂). Bei Anwesenheit von Magnesium, lässt sich ferner feststellen, dass dieses mit dem im Wasser vorhandenen Kohlendioxid zu Magnesiumhydrogencarbonat (Mg(HCO₃)₂) umgesetzt wird. Calcium- beziehungsweise Magnesiumhydrogencarbonate sind ursächlich für die Karbonathärte im Wasser, die in der Einheit mmol/l gemessen wird. Um sie zu bestimmen, gibt es Tests, die nach dem Farbumschlagverfahren funktionieren. Dabei wird in eine abgemessene Menge Wasser ein Tropfen des Testmittels gegeben, was so lange wiederholt wird, bis ein Farbumschlag im Wasser erfolgt. Die Anzahl der Tropfen entspricht dabei dem Maß der Karbonathärte. Auf diese Weise kann jeder Anwender den Härtegrad des Wassers selbst bestimmen, wobei das Wasser in unterschiedliche Härtegrade unterteilt wird. Natürlich kann dieser Wert auch bei den zuständigen Wasserwerken angefragt werden. Man unterscheidet in Abhängigkeit von der Karbonathärte "weiches" Wasser von "hartem" Wasser. Umgangssprachlich wird jedoch weniger eine chemische Unterteilung zwischen den sich ablagernden Stoffen vorgenommen, sondern eher allgemein von "Kalkablagerungen" beziehungsweise "kalkhaltigem" oder "kalkarmem" Wasser oder Fluid gesprochen. Das Maß der Karbonathärte des Wassers oder eines Fluids lässt sehr genaue Rückschlüsse auf die Häufigkeit, mit der Fluide oder Wasser führende Leitungen oder Armaturen entkalkt werden müssen, zu.

Um dem Problem der Kalkablagerungen in Strömungsleitungssystemen und technischen Geräten zu begegnen, sind bereits Entkalkungsmittel bekannt und im Einsatz, die auf Grund einer chemischen Reaktion in der Lage sind, "Kalk" zu lösen. Da dieser Vorgang in Abhängigkeit von der bereits erwähnten Karbonat- oder Wasserhärte mehr oder weniger regelmäßig durchgeführt werden muss, sind verschiedene Ansätze und Lösungen bekannt, einen gewissen Automatismus der Entkalkung herbeizuführen.

Insgesamt stellt sich das Verhalten der Verkalkung wie folgt dar: Kalk löst sich erst vollständig aus dem Wasser, wenn das Wasser erwärmt wird. Erst mit dieser Erwärmung ist es möglich, dass der im Wasser enthaltene Kalk ausfällt. An den Leitungswänden absetzen kann sich dieser Kalk erst bei Abkühlung. Dieser Vorgang braucht eine Zeit, die zumindest der Abkühlzeit und einer weiteren Verweildauer entspricht. Wenn Wasser für einen Kaffee- oder Dampfbezug erhitzt wurde und durch die Leitung fließt, wird der ausgefallene Kalk mitgezogen. Nach dem Getränkebezug bleibt noch heißes Wasser in der Leitung stehen, in dem ebenfalls ausgefallener Kalk schwimmt. Wenn nun direkt oder einige (2 bis 10) Minuten nach dem Getränkebezug ein weiterer Getränkebezug stattfindet, kann sich der gelöste Kalk nicht an den Wänden absetzen, sondern wird mit dem Getränk herausgewaschen, sodass in diesem Fall keine oder nur eine extrem geringe Kalkanhaftung zu erwarten ist. Wenn nun ca. min. 1 Stunde lang kein Getränkebezug stattfindet und das stehende Wasser in der Leitung abkühlt, setzt sich der gelöste Kalk an der Leitungswand ab und verkalkt zumindest Teile des Fluidsystem, wie beispielsweise Leitungen, Ventile, Thermoblöcke und Düsen.
Insgesamt wird bei Kaffeevollautomaten der Entkalkungsbedarf jedoch nur nach der absoluten Anzahl Getränkebezüge oder Wasserdurchlauf festgelegt, sodass in der Regel zu oft entkalkt wird.

Aus der US 2007/0251459 A1 ist ein Getränkebereiter in Form eines Milchaufschäumers bekannt, der eine Steuereinrichtung umfasst, um die Zeit nach einem Milchbezug zu erfassen. Hierbei wird beim Überschreiten einer vorbestimmten Zeit dem Benutzer eine Warnmeldung ausgegeben, einen Reinigungszyklus durchzuführen.

Die WO 2010/105208 A1 offenbart ein Verfahren zum Reinigen eines Filters im Wasservorrat eines Getränkebereiters, bei dem die Bezüge gezählt werden.

Der Erfindung liegt somit die Aufgabe zu Grunde, den Betrieb eines Heißgetränkebereiters hinsichtlich des Entkalkungsverhaltens hinsichtlich Effektivität zu optimieren.

Zumindest diese Aufgabe wird durch ein Verfahren mit den Merkmalen des unabhängigen Anspruchs 1 und durch einen Getränkebereiter gemäß Anspruch 5 gelöst. Vorteilhafte Ausgestaltungen und Weiterbildungen der Erfindung ergeben sich aus den jeweils abhängigen Ansprüchen.

Die mit der Erfindung erreichbaren Vorteile bestehen darin, dass durch den effizienten und bedarfsangepassten Einsatz von Entkalkungsmittel ein sehr sparsamer Verbrauch von Entkalkungsmittel in dem Getränkebereiter erreicht wird. Dadurch wird neben der geringen Abwasserbelastung auch eine Schonung der mit Kalk belasteten Bauteile und Leitungsabschnitte erreicht, da das Material dieser Teile nur bei tatsächlich vorhandener Verkalkung mit dem Entkalkungsmittel, beispielsweise verdünnte Säure, beaufschlagt werden. Ferner wird der Betrieb des Getränkebereiters nicht durch unnötige Entkalkungszyklen beeinträchtigt bzw. gestört.

Dies wird durch folgende Schritte erreicht:
a) erfassen eines Getränke- oder Dampfbezugs;
b) Erhöhen eines Bewertungsindex um einen vorbestimmten Zähler;
c) erfassen eines weiteren Getränke- oder Dampfbezugs;
d) erfassen der Zeit zwischen den beiden Getränke- oder Dampfbezügen
e) erhöhen des Bewertungsindex um einen weiteren vorbestimmten Zähler, wobei der vorbestimmte Zähler hinsichtlich seines Wertes von der erfassten Zeit zwischen den beiden zuletzt durchgeführten Getränke- oder Dampfbezügen abhängig ist;
f) wiederholen der Schritte c bis e, wobei eine Aufforderung einer Entkalkung erfolgt, sobald der Bewertungsindex einen vorbestimmten Grenzwert erreicht oder überschritten hat.

Damit wird die Verkalkung sehr genau, also wie sie wirklich im Strömungsleitungssystem stattfindet, erfasst. Das bedeutet, dass bei häufig kurz nacheinander durchgeführten Getränkebezügen nur eine geringe Verkalkung stattfindet, gegenüber Getränkebezügen mit langen Pausen dazwischen. Ferner ist das Verfahren mittels der ohnehin vorhandenen Steuereinrichtung sehr einfach durchzuführen, da keine weiteren Sensoren benötigt werden.

Zu bedarfsgerechten Beurteilung der Bezüge und der daraus resultierenden Verkalkung ist es zweckmäßig, dass der Zähler um einen ersten Wert erhöht wird, wenn die Zeit zwischen zwei Getränke,- oder Dampfbezügen einen vorbestimmten Grenzwert unterschreitet und um einen zweiten Wert erhöht wird, wobei der erste Wert kleiner ist, als der zweite Wert. Auch diese Weiterbildung ist auf einfache Weise mit der ohnehin vorhandenen Steuereinrichtung sehr einfach zu realisieren.

Anders ausgedrückt, wenn ein Benutzer morgens, mittags und nachmittags einen Cappuccino (als Beispiel für ein Getränk mit heißem Wasser und Dampf) trinkt, ist das bzgl. der Geräteverkalkung wesentlich schlimmer, als wenn der Kunde morgens z. B. fünf Cappuccino trinkt.

Das Gerät kann aus dem Benutzerverhalten lernen bzw. erkennen, wie stark es verkalkt und wie häufig es entkalkt werden muss. Der Entkalkungszyklus wird definiert aus der Art der

Getränkebezüge (viel oder wenig Dampf), der Stillstandzeiten zwischen den Bezügen, der Wasserhärte und dem Durchfluss.

In einer vorteilhaften Weiterbildung wird der Zähler bei einem Dampfbezug um einen geringeren Wert erhöht, als bei einem Getränkebezug. Diese Maßnahme wird der oben genannten Beurteilung hinzugefügt bzw. kombiniert, um das Maß für die tatsächliche Verkalkung noch genauer zu erfassen bzw. zu ermitteln. Das bedeutet, dass wenn der Benutzer mehrere Getränke pro Tag auf zweimal verteilt trinkt, aber insgesamt dabei mehr Dampf als Kaffee zieht, wird der Bewertungsindex nicht um einen vollen Wert erhöht, sondern um einen beispielsweise um die Hälfte reduzierten Wert.

In einer zweckmäßigen Weiterbildung ist der vorbestimmte Grenzwert für die Zeit so festgelegt oder eingestellt, dass er im Bereich zwischen 5 Minuten und 60 Minuten liegt. Damit wird das Verhalten der Kalkanhaftung optimal berücksichtigt.

Wenn Wasser für einen Kaffee- oder Dampfbezug erhitzt wurde und durch die Leitung fließt, wird der ausgefallene Kalk mitgezogen. Nach dem Getränkebezug bleibt noch heißes Wasser in der Leitung stehen, in dem ebenfalls ausgefallener Kalk schwimmt. Wenn nun direkt oder wenige Minuten im Bereich von einer bis zehn Minuten nach dem Getränkebezug ein weiterer Getränkebezug stattfindet, findet noch keine Ablagerung des in der Flüssigkeit gelösten Kalks an den Wänden statt, sondern er wird mit dem Getränk herausgewaschen.

Wenn nun ca. min. 1 Stunde lang kein Getränkebezug stattfindet und das stehende Wasser in der Leitung abkühlt, setzt sich der gelöste Kalk an den Innenseiten der Leitungswände ab und verkalkt die Leitungen, Ventile, Thermoblöcke, Düsen und sonstige mit dem ausgefallenen Kalk in Berührung kommenden Komponenten.

Die Erfindung betrifft ferner einen Getränkebereiter, wie Kaffeevollautomat oder Teevollautomat, umfassend ein Gehäuse und zumindest ein Strömungsleitungssystem, welches mindestens einen Wasser enthaltenden bzw. befüllbaren Wasserbehälter oder einen Wasseranschluss, wenigstens eine Pumpe zum Fördern des Wassers durch Leitungsabschnitte und Komponenten des Strömungsleitungssystems, mindestens eine Heizeinrichtung zum Erhitzen des Wassers, mindestens eine Ventilanordnung und wenigstens eine Entnahmeeinrichtung umfasst, und einer Steuereinrichtung zur Steuerung einer im Strömungsleitungssystem eingebundenen Pumpe, einer Heizeinrichtung und Ventilen zur Zubereitung eines ausgewählten Getränkes, wobei die Steuereinrichtung ferner dazu eingerichtet ist, die Pumpe während einer Phase zum Entkalken des Strömungsleitungssystems zu betreiben. Um eine bedarfsgerechte Entkalkung bereitzustellen, ist es notwendig, die tatsächlich auftretende Verkalkung bzw. Kalkablagerungen im Strömungsleitungssystem zu erfassen bzw. zu ermitteln. Das wird auf einfache Weise dadurch gelöst, dass die Steuereinrichtung einen Mikrocontroller mit einer Speichereinrichtung umfasst und dazu eingerichtet ist, die Zeit zwischen zumindest zwei aufeinanderfolgenden Getränkezubereitungen bzw. Getränke- oder Dampfbezügen zu erfassen und anhand der erfassten Zeit mittels einer Plausibilitätsprüfung ein Maß für eine Verkalkung des Strömungsleitungssystems zu ermitteln.

In einer insgesamt zweckmäßigen Ausführung ist die Steuereinrichtung dazu eingerichtet, den Getränkebereiter gemäß oben genanntem Verfahren zu betreiben.

In einer insgesamt zweckmäßigen Ausführung ist im Speicher für das Maß der Verkalkung ein Bewertungsindex vorgesehen, der von dem Mikrocontroller nach jedem Getränke- oder Dampfbezug entsprechend erhöht werden kann, um beim Erreichen oder Überschreiten eines vorbestimmten oder vorgegebenen Grenzwertes eine Verkalkung des Gerätes zu signalisieren bzw. eine Entkalkung bzw. einen Entkalkungszyklus anzufordern.

In einer vorteilhaften Weiterbildung umfasst der Getränkebereiter eine Bedienhandhabe zur Eingabe einer Angabe zur Wasserhärte für die Berechnung des Bewertungsindex zur Berücksichtigung als weitere Eingangsgröße für die Plausibilitätsprüfung. Die Bedienhandhabe steht dazu mit der Steuereinrichtung bzw. mit dem Mikrokontroller der Steuereinrichtung in Wirkverbindung.

In einer insgesamt vorteilhaften Ausführung umfasst der Getränkebereiter eine Entkalkungsvorrichtung mit einem Vorratsbehälter zur Vorhaltung eines wasserlöslichen oder eine Lösung bildenden Entkalkungsmittels, und eine weitere Ventilanordnung zur fluidischen Verbindung der Entkalkungsvorrichtung (5) mit dem Strömungsleitungssystem und zum aktivieren des Entkalkungszyklus aufgrund der Anforderung. Werden vom Anwender keine besonderen Aktivitäten zur Durchführung der Entkalkung des Strömungsleitungssystems verlangt, mit Ausnahme der Auffüllung des Wasserbehälters und/oder Ausleeren des Abwasserbehälters bzw. der Tropfschale.

In einer anderen Ausführung umfasst der Getränkebereiter eine mittels des Mikrocontrollers gesteuerte Anzeigeeinrichtung zur visuellen Ausgabe bzw. Anzeige einer signalisierten Verkalkung. Diese dient zur Aufforderung des Benutzers, die durch die Steuereinrichtung angeforderte Entkalkung oder Entkalkungszyklus durchzuführen Dies ist für die einfachen Geräte gedacht, bei denen eine benutzerunterstützte Entkalkung vorgenommen werden muss.

Ein Ausführungsbeispiel der Erfindung ist in den Zeichnungen rein schematisch dargestellt und wird nachfolgend näher beschrieben. Es zeigt
- Fig. 1:: einen Getränkebereiter bzw. Kaffeevollautomaten;
- Fig. 2:: eine bevorzugte Ausführung des Strömungsleitungssystems in einer schematischen Ansicht und
- Fig. 3:: ein Diagramm zur Darstellung Getränkebezüge und die Auswirkungen auf einen Bewertungsindex für die Verkalkung im Strömungsleitungssystem.

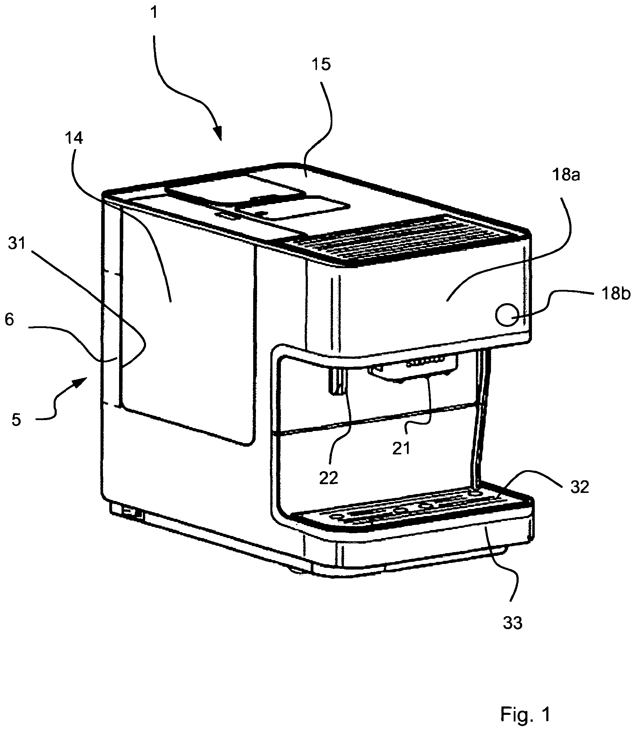

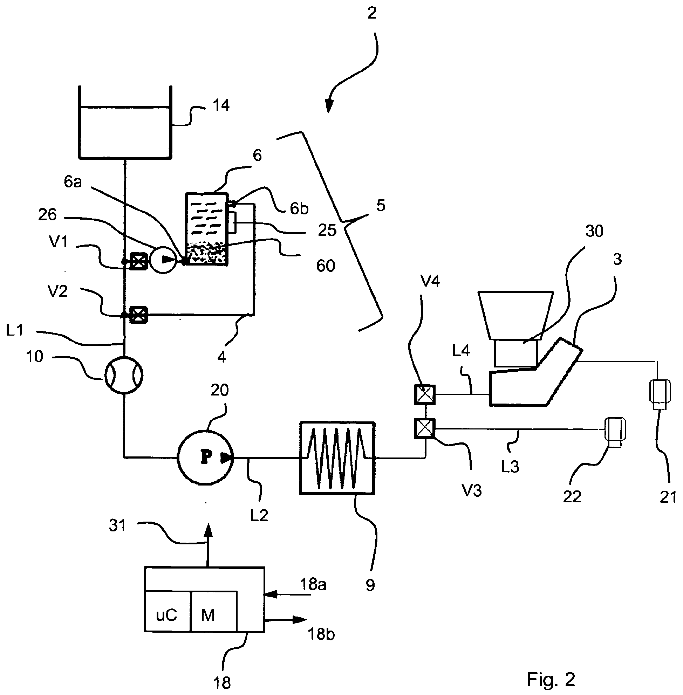

Die Fig.1 zeigt am Beispiel eines als Standgerät ausgebildeten Getränkeautomaten 1 die Möglichkeit, der Unterbringung des Strömungsleitungssystems 2 und Vorratsbehälter 6 zur Bevorratung eines Reinigungsmittels in einem derartigen Getränkeautomaten 1. In der gezeigten Ausführung ist seitlich im Gehäuse 15 des Getränkeautomaten 1 ein Seitenfach 31 vorhanden, dass dem Einsetzen beziehungsweise dem Auswechseln des Vorratsbehälters 6 dient, der im Geräteinneren, hinter diesem Seitenfach 30 angeordnet ist. Im Frontbereich des Getränkeautomaten 1 verfügt dieser über einen Vorbau 31, in dem sichtgeschützt mehrere Entnahmeeinrichtungen 21, 22 untergebracht sind. Bei der Entnahmeeinrichtung 22 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse zur Abgabe von Kaffeegetränken dar. Eine Brüheinheit mit einer Brühkammer 3 im Inneren des Gerätes 1 dient zur Zubereitung des Getränkes, wobei in die Brühkammer 3 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einen hierfür unterhalb des Abtropfbleches 32 vorhandenen Auffangbehälter abzuführen. Das Gerät 1 umfasst gem. Fig. 1 und 2 ferner eine Steuereinrichtung 18, die dazu eingerichtet ist, die einzelnen Funktionsbaugruppen, wie Pumpen 20, Ventile und Heizeinrichtung 9 und Mahlwerk 30, soweit vorhanden, zu steuern, wie es für die Zubereitung des jeweils ausgewählten Getränkes notwendig ist. Die Steuereinrichtung 18 ist in dieser Ausführung ferner dazu eingerichtet, die Ventile V1, V2 des Strömungsleitungssystems 2 so anzusteuern, dass eine vollautomatische Entkalkung des Strömungsleitungssystems 2, insbesondere der mit Kalk oder anderen Ablagerungen beaufschlagten Leitungsabschnitte bzw. Komponenten, wie beispielsweise Flowmeter, Pumpe oder Ventile V3, V4, stattfindet.

Fig. 2 zeigt einen vereinfachten Schaltplan eines Strömungsleitungssystems 2 innerhalb eines Getränkeautomaten 1. Von einer Wasserquelle 14, in diesem Beispiel ein Wassertank, wird das Strömungsleitungssystem 2 mit frischem Wasser versorgt. Das Strömungsleitungssystem 2 umfasst zwei Teile, wobei ein erster Teil der Zubereitung von Getränken dient und der andere Teil als Bypass 4 von diesem ersten Teil des Strömungsleitungssystems 2 abgezweigt ist. Der Bypass 4 enthält den Vorratsbehälter 6 mit dem darin enthaltenen Entkalkungsmittel 60 oder Säure, welche geeignet ist zum Einsatz in dem Strömungsleitungssystem 2, welches flüssig, pulverförmig, granulatförmig oder als wasserlöslicher Block ausgebildet ist. Als wasserlöslicher Block kommen Ausführungen als Pille/Kugel, gegebenenfalls mit einem Überzug gegen Verkleben bei Dampfeinwirkung in Frage und welche mittels der Ventile V1 und V2 aktiviert werden können, so dass dieser Leitungsabschnitt 4 eine Entkalkungsvorrichtung 5 bildet, die bei Bedarf an den wasserführenden Teil des Strömungsleitungssystems 2 angeschlossen werden kann. Zur Verbindung des Bypasses 4 mit oder zur Trennung des Bypasses 4 von dem ersten Teil des Strömungsleitungssystems 2 dient auf der Eingangsseite des Bypasses 4 das Mehrwegventil V1, und auf der Ausgangsseite, zum Leitungsabschnitt L1 das Mehrwegventil V2. Zur Erzeugung der Strömung innerhalb des Strömungsleitungssystems 2 sowie des erforderlichen Druckaufbaus dient eine Pumpe 20. Darüber hinaus weist der zur Zubereitung der Getränke genutzte Teil des Strömungsleitungssystems 2 eine Heizeinrichtung 9 zur Erwärmung des Wassers 2a sowie mehrere Entnahmeeinrichtungen 21, 22, sowie Leitungsabschnitte L1, L2, L3, L3 zur Verbindung der einzelnen Komponenten miteinander auf, wobei die Dampfdüse 22 zur Ausgabe von Dampf und zur Ausgabe von heißem Wasser und/oder die Kaffeedüse 21 zur Ausgabe des zubereiteten Kaffeegetränkes oder Teegetränkes, je nachdem, welches Pulver oder Substrat der Brühkammer zugeführt wurde, vorgesehen ist. Zur selektiven Ansteuerung der Entnahmeeinrichtungen 21, 22 dienen die Mehrwegeventile V3 und V4, die den Entnahmeeinrichtungen 21, bzw. der Brühkammer 3 in Strömungsrichtung betrachtet vorgeschaltet sind. Darüber hinaus kann das Strömungsleitungssystem 2 ein Messgerät zur Volumenstrommessung, das als Flowmeter 10 bezeichnet wird, aufweisen, das hilfreich ist, um eine genaue Menge frischen Wassers zu bestimmen, die für die Zubereitung eines Getränkes erforderlich ist. Darüber hinaus lässt sich mit einer derartigen Messeinrichtung 10 auch die Anzahl der hergestellten Getränke bestimmen.

Eine Steuereinrichtung 18 mit einem Mikrocontroller uC und einer Speichereinrichtung M dient zur Durchführung einer Getränkezubereitung, wobei hierbei die Aktivierung der Heizeinrichtung, der Ventile V1, V2, V3 und V4 sowie der Pumpe 20, der Brühkammer 3 und bedarfsweise weiteren Komponenten, wie einem Mahlwerk 30 durch entsprechende Signalverbindungen 31 erfolgt. In Fig. 2 ist die Signalverbindung 31 zum Motor der Pumpe 20 skizziert, wobei die Ansteuerung der Pumpe 20 in einer bevorzugten derart erfolgt, dass verschiedene Förderleistungen eingestellt werden können.

Gemäß einer weiteren Ausführung ist in der Bypassleitung 4 eine weitere Pumpe 26 eingesetzt, die zur Förderung von Frischwasser durch den Vorratsbehälter 6 oder Kartusche dient, um Entkalkungsmittel aus dem Behälter in die freigeschalteten Leitungsabschnitte des Strömungsleitungssystems 2 vorgesehen ist. Diese Pumpe 26 wird dabei von der Steuereinrichtung 18 ebenfalls so gesteuert, dass sich vorbestimmte Förderleistungen einstellen, um eine vorbestimmte Säurekonzentration bzw. Entkalkungsmittelkonzentration im Strömungsleitungssystem 2 bzw. in den einzelnen Leitungsabschnitten L1, L2, L3, L4 und den daran angeschlossenen Komponenten 10, 20, 9, V2, V3, 22, oder 10, 20, 9, V2, V4, L4, 3, 21 zu erreichen.

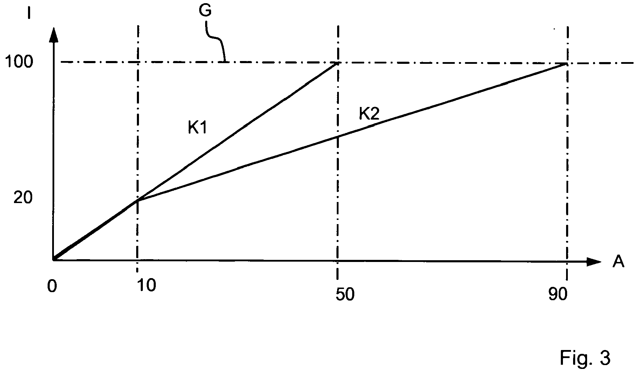

Fig. 3 zeigt in einem Diagramm eine Mehrzahl von Getränkebezügen A und die Auswirkung auf den Bewertungsindex I. Als Grenzwert G ist hier eine Zahl von 100 festgelegt. Die Kennlinie K1 zeigt das Verhalten bei Getränkebezügen, bei dem eine normale Verkalkung zu erwarten ist. In diesem Fall wird nach jedem Getränkebezug eine Stunde gewartet, bis der nächstfolgende Getränkebezug aktiviert wird. Zu erkennen ist, dass bei diesem Verhalten nach 50 Bezügen A=50 der Bewertungsindexes I den Grenzwert 100 erreicht, der für eine Verkalkung des Strömungsleitungssystems 2 steht, die eine Entkalkungsmaßnahme erfordert.

Die Kennlinie K2 zeigt die Mehrzahl von Getränkebezügen A, wobei zwischen den ersten 10 Getränkebezügen jeweils eine längere Pause im Bereich von mindestens 5 Minuten vorhanden ist. Der Bewertungsindex wird hierbei jeweils um den normalen Wert erhöht. Ab dem 10. Getränkebezug A=10 laufen die nachfolgenden Bezüge ohne Pause ab bzw. maximal mit einer sehr kurzen Pausenzeit dazwischen. In diesen Fällen wird bei jedem Getränkebezug der Bewertungsindex I um den halben Betrag erhöht, Zu erkennen ist hierbei, dass nach 80 weiteren, quasi kontinuierlich aufeinanderfolgenden Getränkebezügen der Grenzwert G für die Verkalkung erreicht wird.

Die Feststellung der Verkalkung bzw. die oben genannte Maßnahme zu Beeinflussung des Bewertungsindex I wird durch den Mikrocontroller uC in Verbindung mit der Speichereinrichtung M bereitgestellt. Über die Bedienhandhabe 18a können als Option durch eine Benutzereingabe Werte für den Kalkgehalt des Wassers, in der Regel ein Maß für die sogenannte Wasserhärte, dem Mikrocontroller uC bzw. der Steuereinrichtung 18 zugeführt werden.

Insgesamt ist das Verfahren für Heißgetränkebereiter, wie Kaffeevollautomaten oder Teevollautomaten oder Kakaovollautomaten bevorzugt geeignet.

## Patentansprüche

1. Verfahren zum Betreiben eines Getränkebereiters (1), wie Kaffeevollautomat oder Teevollautomat, umfassend ein Gehäuse (15) und zumindest ein Strömungsleitungssystem (2), welches mindestens einen Wasser enthaltenden bzw. befüllbaren Wasserbehälter (14) oder einen Wasseranschluss, wenigstens eine Pumpe (20) zum Fördern des Wassers durch Leitungsabschnitte (L1, L2, L3, L4) und Komponenten des Strömungsleitungssystems (2), mindestens eine Heizeinrichtung (9) zum Erhitzen des Wassers, mindestens eine Ventilanordnung (V3, V4) und wenigstens eine Entnahmeeinrichtung (21, 22) umfasst,
umfassend die Schritte
a) erfassen eines Getränke- oder Dampfbezugs;
b) Erhöhen eines Bewertungsindex um einen vorbestimmten Zähler;
**gekennzeichnet durch** die weiteren Schritte
c) erfassen eines weiteren Getränke,- oder Dampfbezugs;
d) erfassen der Zeit zwischen den beiden Getränke- oder Dampfbezügen
e) erhöhen des Bewertungsindex um einen weiteren vorbestimmten Zähler, wobei der vorbestimmte Zähler hinsichtlich seines Wertes von der erfassten Zeit zwischen den beiden zuletzt durchgeführten Getränke- oder Dampfbezügen abhängig ist;
f) wiederholen der Schritte c bis e, wobei eine Aufforderung einer Entkalkung erfolgt, sobald der Bewertungsindex einen vorbestimmten Grenzwert (G) erreicht oder überschritten hat.

2. Verfahren zum Betreiben eines Getränkebereiters (1) nach Anspruch 1,
**dadurch gekennzeichnet,**
**dass** der Bewertungsindex (I) um einen ersten Wert erhöht wird, wenn die Zeit zwischen zwei Getränke- oder Dampfbezügen einen vorbestimmten Grenzwert unterschreitet und um einen zweiten Wert erhöht wird, wobei der erste Wert kleiner ist, als der zweite Wert.

3. Verfahren zum Betreiben eines Getränkebereiters (1) nach Anspruch 1,
**dadurch gekennzeichnet,**
**dass** der Bewertungsindex (I) bei einem Dampfbezug um einen geringeren Wert erhöht wird, als bei einem Getränkebezug.

4. Verfahren zum Betreiben eines Getränkebereiters (1) nach Anspruch 1,
**dadurch gekennzeichnet,**
**dass** der vorbestimmte Grenzwert (G) für die Zeit im Bereich zwischen 5 Minuten und 60 Minuten liegt.

5. Getränkebereiter (1), wie Kaffeevollautomat oder Teevollautomat, umfassend ein Gehäuse (15) und zumindest ein Strömungsleitungssystem (2), welches mindestens einen Wasser enthaltenden bzw. befüllbaren Wasserbehälter (14) oder einen Wasseranschluss, wenigstens eine Pumpe (20) zum Fördern des Wassers durch Leitungsabschnitte (L1, L2, L3, L4) und Komponenten des Strömungsleitungssystems (2), mindestens eine Heizeinrichtung (9) zum Erhitzen des Wassers, mindestens eine Ventilanordnung (V3, V4) und wenigstens eine Entnahmeeinrichtung (21, 22) umfasst, und einer Steuereinrichtung (18) zur Steuerung einer im Strömungsleitungssystem (2) eingebundenen Pumpe (20), einer Heizeinrichtung (9) und Ventilen (V3, V4) zur Zubereitung eines ausgewählten Getränkes, wobei die Steuereinrichtung (18) ferner dazu eingerichtet ist, die Pumpe (20) während einer Phase zum Entkalken des Strömungsleitungssystems (2) zu betreiben,
**dadurch gekennzeichnet,**
**dass** die Steuereinrichtung (18) einen Mikrocontroller (uC) mit einer Speichereinrichtung (M) umfasst und dazu eingerichtet ist, die Zeit zwischen zumindest zwei aufeinanderfolgenden Getränke- oder Dampfbezügen zu erfassen und anhand der erfassten Zeit mittels einer Plausibilitätsprüfung ein Maß (I) für eine Verkalkung des Strömungsleitungssystems (2) zu ermitteln.

6. Getränkebereiter nach Anspruch 5,
**dadurch gekennzeichnet,**
**dass** die Steuereinrichtung (2) dazu eingerichtet ist, den Getränkebereiter (1) gemäß dem Verfahren nach einem der Ansprüche 1 bis 4 zu betreiben.

7. Getränkebereiter nach Anspruch 5 oder 6,
**dadurch gekennzeichnet,**
**dass** im Speicher (M) für das Maß der Verkalkung ein Bewertungsindex (I) vorgesehen ist, der von dem Mikrocontroller (uC) nach jedem Getränke- oder Dampfbezug entsprechend erhöht werden kann, um beim Erreichen oder Überschreiten eines vorbestimmten oder vorgegebenen Grenzwertes (G) eine Verkalkung des Gerätes (1) zu signalisieren bzw. eine Entkalkung bzw. einen Entkalkungszyklus anzufordern.

8. Getränkebereiter nach Anspruch 5,
**gekennzeichnet durch**
eine Bedienhandhabe (18a) zur Eingabe einer Angabe zur Wasserhärte für die Berechnung des Bewertungsindex (I) zur Berücksichtigung als weitere Eingangsgröße für die Plausibilitätsprüfung.

9. Getränkebereiter nach einem der Ansprüche 5 bis 8,
**gekennzeichnet durch** und eine Entkalkungsvorrichtung (5) mit einem Vorratsbehälter (6) zur Vorhaltung eines wasserlöslichen oder eine Lösung bildenden Entkalkungsmittels (60), und eine weitere Ventilanordnung (V1, V2) zur fluidischen Verbindung der Entkalkungsvorrichtung (5) mit dem Strömungsleitungssystem (2) und zum Aktivieren des Entkalkungszyklus aufgrund der Anforderung.

10. Getränkebereiter nach einem der Ansprüche 5 bis 8
**gekennzeichnet durch** eine mittels dem Mikrocontroller (uC) gesteuerte Anzeigeeinrichtung (18b) zur Ausgabe einer signalisierten Verkalkung.

## Claims

1. Method for operating a beverage preparation machine (1), such as a fully automatic coffee machine or a fully automatic tea machine, comprising a housing (15) and at least one flow-line system (2) which comprises at least one water container (14), which contains or can be filled with water, or a water supply, at least one pump (20) for conveying the water through line portions (L1, L2, L3, L4) and components of the flow-line system (2), at least one heating device (9) for heating the water, at least one valve arrangement (V3, V4) and at least one discharge device (21, 22),
comprising the steps of:
a) detecting a beverage or steam extraction;
b) raising an evaluation index by a predetermined numerator;
**characterised by** the further steps of
c) detecting a further beverage or steam extraction;
d) detecting the time between the two beverage or steam extractions;
e) raising the evaluation index by a further predetermined numerator, the value of the predetermined numerator being dependent on the detected time between the two most recent beverage or steam extractions;
f) repeating steps c to e, a descaling process being prompted as soon as the evaluation index has reached or exceeded a predetermined threshold value (G).

2. Method for operating a beverage preparation machine (1) according to claim 1, **characterised in that**
the evaluation index (I) is raised by a first value if the time between two beverage or steam extractions does not meet a predetermined threshold value and is raised by a second value, the first value being smaller than the second value.

3. Method for operating a beverage preparation machine (1) according to claim 1, **characterised in that**
for a steam extraction, the evaluation index (I) is raised by a lower value than for a beverage extraction.

4. Method for operating a beverage preparation machine (1) according to claim 1, **characterised in that**
the predetermined threshold value (G) for the time is in the range of between 5 minutes and 60 minutes.

5. Beverage preparation machine (1), such as a fully automatic coffee machine or a fully automatic tea machine, comprising a housing (15) and at least one flow-line system (2), which comprises at least one water container (14), which contains or can be filled with water, or a water supply, at least one pump (20) for conveying the water through line portions (L1, L2, L3, L4) and components of the flow-line system (2), at least one heating device (9) for heating the water, at least one valve arrangement (V3, V4) and at least one discharge device (21, 22), and a control device (18) for controlling a pump (20) that is integrated in the flow-line system (2), a heating device (9) and valves (V3, V4) for preparing a selected beverage, the control device (18) also being designed to operate the pump (20) during a phase for descaling the flow-line system (2),
**characterised in that**
the control device (18) comprises a microcontroller (uC) having a memory device (M) and is designed to detect the time between at least two successive beverage or steam extractions and to determine a measurement (I) for a build-up of scale in the flow-line system (2) on the basis of the detected time by means of a plausibility check.

6. Beverage preparation machine according to claim 5,
**characterised in that**
the control device (2) is designed to operate the beverage preparation machine (1) according to the method according to any of claims 1 to 4.

7. Beverage preparation machine according to either claim 5 or claim 6,
**characterised in that**
an evaluation index (I) is provided in the memory (M) for the measurement of the build-up of scale, which evaluation index can be accordingly raised by the microcontroller (uC) after each beverage or steam extraction in order to indicate a build-up of scale in the apparatus (1) or to request a descaling process or a descaling cycle when a predetermined or predefined threshold value (G) is reached or exceeded.

8. Beverage preparation machine according to claim 5,
**characterised by**
an operating element (18a) for inputting water-hardness information for calculating the evaluation index (I) to be taken into account as a further input variable for the plausibility check.

9. Beverage preparation machine according to any of claims 5 to 8,
**characterised by** a descaling device (5) comprising a storage container (6) for storing a water-soluble or solution-forming descaling agent (60), and a further valve arrangement (V1, V2) for fluidically connecting the descaling device (5) to the flow-line system (2) and for activating the descaling cycle on the basis of the request.

10. Beverage preparation machine according to any of claims 5 to 8,
**characterised by** a display device (18b), controlled by means of the microcontroller (uC), for outputting an indicated build-up of scale.

## Revendications

1. Procédé de fonctionnement d'un préparateur de boissons (1), tel qu'une machine à café automatique ou machine à thé automatique, comprenant un boîtier (15) et au moins un système (2) de conduites d'écoulement qui comprend au moins un réservoir d'eau (14) contenant de l'eau ou respectivement pouvant être rempli d'eau ou un raccordement d'eau, au moins une pompe (20) pour l'acheminement de l'eau à travers des tronçons de conduites (L1, L2, L3, L4) et des composants du système (2) de conduites d'écoulement, au moins un dispositif de chauffage (9) pour le chauffage de l'eau, au moins un arrangement de soupapes (V3, V4) et au moins un dispositif de soutirage (21, 22),
comprenant les étapes suivantes
a) détection d'un prélèvement de boisson ou de vapeur ;
b) augmentation d'un indice d'évaluation d'un numérateur prédéfini ;
**caractérisé par** les autres étapes
c) détection d'un autre prélèvement de boisson ou de vapeur ;
d) détection du temps entre les deux prélèvements de boisson ou de vapeur ;
e) augmentation de l'indice d'évaluation d'un autre numérateur prédéfini, dans lequel le numérateur prédéfini est dépendant, en ce qui concerne sa valeur, du temps détecté entre les deux prélèvements de boisson ou de vapeur effectués en dernier ;
f) répétition des étapes c à e, dans lequel un ordre de détartrage survient dès que l'indice d'évaluation a atteint ou dépassé une valeur limite (G) prédéfinie.

2. Procédé de fonctionnement d'un préparateur de boissons (1) selon la revendication 1,
**caractérisé en ce que**
l'indice d'évaluation (I) est augmenté d'une première valeur quand le temps entre deux prélèvements de boisson ou de vapeur passe au-dessous d'une valeur limite prédéfinie, et est augmenté d'une deuxième valeur, dans lequel la première valeur est inférieure à la deuxième valeur.

3. Procédé de fonctionnement d'un préparateur de boissons (1) selon la revendication 1,
**caractérisé en ce que**
l'indice d'évaluation (I) est augmenté d'une valeur plus faible lors d'un prélèvement de valeur que lors d'un prélèvement de boisson.

4. Procédé de fonctionnement d'un préparateur de boissons (1) selon la revendication 1,
**caractérisé en ce que**
la valeur limite (G) prédéfinie pour le temps se situe dans la plage entre 5 minutes et 60 minutes.

5. Préparateur de boissons (1), tel qu'une machine à café automatique ou machine à thé automatique, comprenant un boîtier (15) et au moins un système (2) de conduites d'écoulement qui comprend au moins un réservoir d'eau (14) contenant de l'eau ou respectivement pouvant être rempli d'eau ou un raccordement d'eau, au moins une pompe (20) pour l'acheminement de l'eau à travers des tronçons de conduites (L1, L2, L3, L4) et des composants du système (2) de conduites d'écoulement, au moins un dispositif de chauffage (9) pour le chauffage de l'eau, au moins un arrangement de soupapes (V3, V4) et au moins un dispositif de soutirage (21, 22), et un dispositif de commande (18) pour la commande d'une pompe (20) intégrée dans le système (2) de conduites d'écoulement, un dispositif de chauffage (9) et des soupapes (V3, V4) pour la préparation d'une boisson sélectionnée, dans lequel le dispositif de commande (18) est également aménagé pour faire fonctionner la pompe (20) pendant une phase de détartrage du système (2) de conduites d'écoulement,
**caractérisé en ce que**
le dispositif de commande (18) comprend un microcontrôleur (uC) avec un dispositif de mémoire (M) et est aménagé pour détecter le temps entre au moins deux prélèvements de boisson ou de vapeur successifs et pour déterminer, à l'aide du temps détecté, au moyen d'un contrôle de plausibilité, une mesure (I) de l'entartrage du système (2) de conduites d'écoulement.

6. Préparateur de boissons selon la revendication 5,
**caractérisé en ce que**
le dispositif de commande (2) est aménagé pour faire fonctionner le préparateur de boissons (1) suivant le procédé selon l'une des revendications 1 à 4.

7. Préparateur de boissons selon la revendication 5 ou 6,
**caractérisé en ce que**,
dans la mémoire (M), pour la mesure de l'entartrage, il est prévu un indice d'évaluation (I) qui peut, après chaque prélèvement de boisson ou de vapeur, être augmenté en conséquence par le microcontrôleur (uC) pour, lorsqu'une valeur limite (G) prédéfinie ou prescrite est atteinte ou dépassée, signaler un entartrage de l'appareil (1) ou respectivement demander un détartrage ou respectivement un cycle de détartrage.

8. Préparateur de boissons selon la revendication 5,
**caractérisé par**
un élément de manoeuvre (18a) destiné à entrer une indication concernant la dureté de l'eau pour le calcul de l'indice d'évaluation (I) en vue de la prise en compte en tant que grandeur d'entrée supplémentaire pour le contrôle de plausibilité.

9. Préparateur de boissons selon l'une des revendications 5 à 8,
**caractérisé par** un dispositif de détartrage (5) avec un réservoir de stockage (6) pour la fourniture d'un produit de détartrage (60) soluble dans l'eau ou formant une solution, et un autre arrangement de soupapes (V1, V2) pour le raccordement fluidique du dispositif de détartrage (5) au système (2) de conduites d'écoulement et pour l'activation du cycle de détartrage en raison de la demande.

10. Préparateur de boissons selon l'une des revendications 5 à 8,
**caractérisé par** un dispositif d'affichage (18b), commandé au moyen du microcontrôleur (uC), pour la sortie d'un entartrage signalé.
